Europäisches Patentamt

(19) European Patent Office

Office européen des brevets

(11) Numéro de publication: **0 051 539**
**B1**

(12) **FASCICULE DE BREVET EUROPEEN**

(45) Date de publication du fascicule du brevet:
**03.07.85**

(21) Numéro de dépôt: **81401730.7**

(22) Date de dépôt: **29.10.81**

(51) Int. Cl.⁴: **C 03 B 35/18**, B 22 D 11/128,
F 27 D 3/02, F 16 C 13/00,
B 65 G 39/02

(54) Renforcement des rouleaux dans une installation transportant du verre à haute température.

(30) Priorité: **03.11.80 FR 8023449**
**13.05.81 FR 8109481**

(43) Date de publication de la demande:
**12.05.82 Bulletin 82/19**

(45) Mention de la délivrance du brevet:
**03.07.85 Bulletin 85/27**

(84) Etats contractants désignés:
**AT BE DE IT LU NL SE**

(56) Documents cités:
**FR - A - 2 301 484**
**FR - A - 2 393 747**
**US - A - 3 404 973**

(73) Titulaire: **SAINT-GOBAIN VITRAGE, Les Miroirs 18, avenue d'Alsace, F-92400 Courbevoie (FR)**

(72) Inventeur: **Potier, Pierre, 2 Avenue du Fresnay, F-78500 Sartrouville (FR)**

(74) Mandataire: **Eudes, Marcel et al, Saint-Gobain Recherche 39 Quai Lucien Lefranc, F-93304 Aubervilliers Cedex (FR)**

## Description

La présente invention se rapporte à des rouleaux servant à supporter et à transporter des feuilles de verre planes à haute température, notamment dans des installations de trempe, ou dans des fours de réchauffage du verre en vue de la trempe, du bombage ou de toute autre opération.

Les rouleaux employés doivent être capables d'une part de résister aux hautes températures sans se déformer pour ne pas communiquer au verre leurs déformations et d'autre part de ne pas coller au verre sous peine d'altérer sa surface.

Il est connu par les brevets français 1 448 278 et 2 279 682 d'utiliser des rouleaux droits rigides, en métal ou en silice vitreuse compacte, revêtus d'une gaine tubulaire souple, tressée ou tricotée en fibres réfractaires, en particulier des fibres de verre ou de silice. Mais, d'une part les gaines tubulaires représentent une part non négligeable du coût de fonctionnement des installations qui en comportent et à ce titre il est intéressant de pouvoir les supprimer, et d'autre part elles ne sont pas adaptées à certaines fabrications de verre imprimé car les feuilles de verre étant transportées face imprimée en-dessous, les reliefs des motifs imprimés les abîment trop rapidement.

On a donc envisagé de supprimer les gaines tubulaires et de transporter les feuilles de verre sur des rouleaux nus. Pour qu'à haute température, le verre ne colle pas et ne soit pas marqué, on utilise des rouleaux en silice frittée, par exemple une silice frittée à plus de 99% de silice, diffusée sous le nom de «GLASROCK».

Mais ces rouleaux en silice frittée, comme d'ailleurs les rouleaux métalliques ou en silice compacte de l'art antérieur, reposent à leurs extrémités sur deux groupes de galets en acier, montés libres en rotation. Ils sont accouplés par une de leurs extrémités à un organe moteur et sont ainsi entraînés en rotation.

On constate alors que les extrémités de ces rouleaux en silice frittée qui portent sur les galets ne sont pas suffisamment dures et résistantes et qu'elles s'usent très rapidement. Il en résulte une altération du plan de support des feuilles de verre constitué par toutes les génératrices supérieures des rouleaux, altération préjudiciable à la qualité du verre.

On peut recouvrir les extrémités des rouleaux de manchons en acier (FR-A-2 393 747), par exemple vissés, mais il faut alors usiner lesdites extrémités de rouleaux, ce qui d'une part augmente considérablement le prix de revient, ce qui d'autre part rend les rouleaux fragiles sous charge.

Pour éviter ces usures des rouleaux en silice frittée, l'invention propose de renforcer les portions susceptibles d'être usées, par un traitement de surface, de telle sorte que les rouleaux ainsi renforcés présentent, notamment dans leurs zones d'extrémité appelées à porter sur les galets, des portions annulaires plus dures.

C'est ainsi que l'invention propose une installation de traitement de feuilles de verre notamment four de trempe ou four de réchauffage, dans laquelle les feuilles de verre sont transportées à haute température sur des rouleaux en silice frittée (FR-A-393 747) caractérisée en ce que les rouleaux possèdent au moins dans leurs régions susceptibles d'être usées et portant sur des galets de support, des zones annulaires traitées, plus dures, obtenues par exposition à une haute température supérieure à 1750 °C, de préférence de l'ordre de 1800 °C jusqu'à obtenir un aspect de surface lisse et vitreux.

L'invention a également pour objet un procédé pour obtenir de tels rouleaux.

Les zones annulaires traitées ont avantageusement de 2 à 6 cm de largeur de façon à porter sur des galets ayant environ 1 cm de large.

L'invention sera maintenant décrite avec plus de détails en référence aux figures qui représentent:

Figure 1: une coupe transversale d'une installation dans laquelle les feuilles de verre sont portées par des rouleaux,

Figure 2: une vue de profil de l'installation de la figure 1,

Figure 3: un schéma d'un rouleau traité,

Figure 4: un schéma d'un dispositif employé pour traiter les rouleaux par chauffage superficiel.

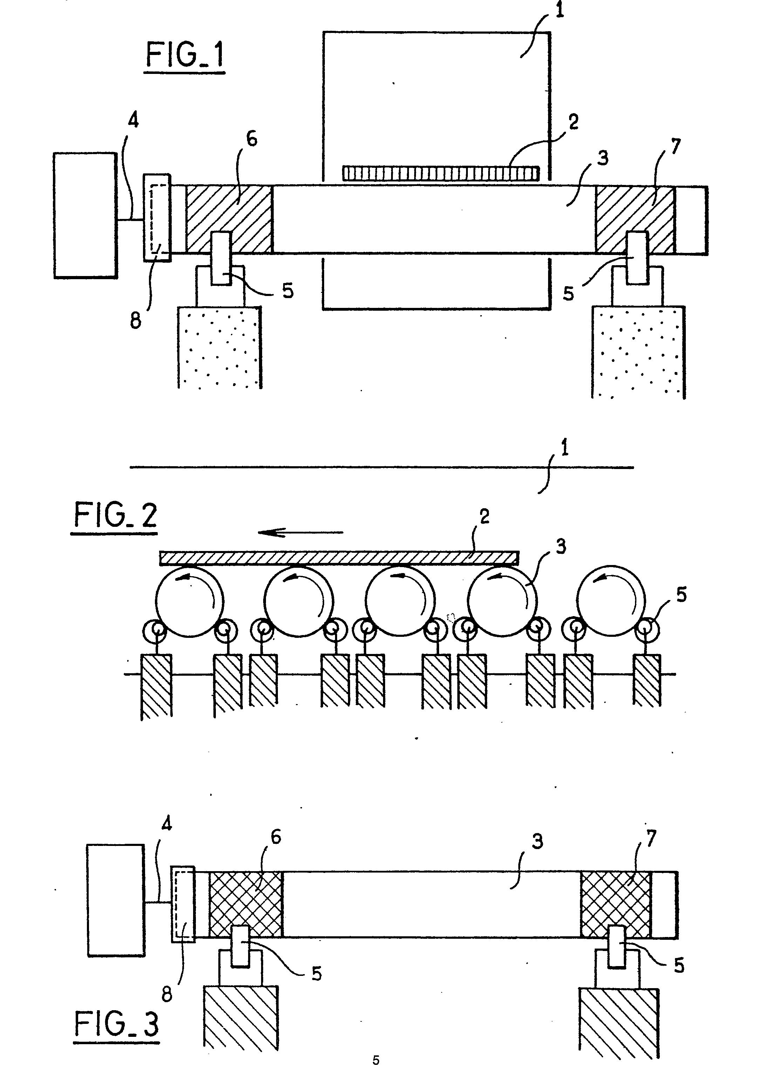

On voit sur les figures 1 et 2 une installation dans laquelle le verre circule à plat sur des rouleaux. Cette installation comporte une enceinte fermée 1 qui peut être un four de trempe, de bombage ou de toute autre opération.

Cette enceinte 1 est portée à une température élevée, de 600 à 900 °C selon sa destination. A l'intérieur de cette enceinte 1, des feuilles de verre 2 défilent à plat, portées par des rouleaux tels que 3, dont les extrémités sortent à l'extérieur de l'enceinte chauffée 1. Ces rouleaux 3 sont couplés par une de leurs extrémités à un arbre moteur 4 qui les entraîne en rotation. Ils reposent chacun sur deux berceaux de galets en acier tels que 5 montés en libre rotation. Précédemment, ces rouleaux 3 étaient métalliques ou en silice vitreuse compacte et recouverts par une gaine tubulaire en fibres réfractaires, silice ou verre, qui évitait un marquage des feuilles de verre.

Pour faire l'économie de gaines tubulaires, on emploie maintenant des rouleaux nus en silice frittée, par exemple en «GLASROCK» renforcés par un traitement approprié au moins dans les zones susceptibles d'être dégradées par usure.

On obtient ainsi, comme montré figure 3, un rouleau en silice frittée muni de zones annulaires à surface plus lisse, plus dure, et à aspect vitreux. Si l'on a traité seulement les extrémités en vue du contact avec les galets 5, on obtient un rouleau 3 qui porte à proximité de ses extrémités deux anneaux 6 et 7 de largeur au moins égale à celle qui doit être en contact avec lesdits galets 5, c'est-à-dire de 2 à 6 cm de largeur et classiquement de 3 cm lorsque les galets on environ 1 cm de largeur.

Alors qu'un rouleau 3 en silice frittée non traité à ses extrémités ne résiste que quelques jours au roulement sur des galets 5 en acier, un rouleau traité résiste beaucoup plus longtemps.

La liaison d'un rouleau 3 avec son arbre 4 d'entraînement peut se faire à l'aide d'un manchon 8, recouvrant le bout dudit rouleau, à l'extérieur de la partie portant sur les galets 5. Ce manchon peut avoir n'importe quelle forme et n'importe quelle dimension puisqu'il ne porte plus sur les galets et que la section du rouleau à cet endroit n'importe pas, et en particulier il pourra être plus gros que le rouleau de façon à pouvoir être emmanché sur lui sans usinage.

Pour traiter certaines zones de la surface des rouleaux, en vue de les renforcer, on les porte à une température élevée, supérieure à 1750°C et de préférence de l'ordre de 1800°C jusqu'à obtenir un aspect lisse et vitreux en surface. Lorsqu'il s'agit de traiter un rouleau ayant environ 70 mm de diamètre sur une zone ayant environ 5 cm de large, on effectue le traitement pendant un temps supérieur à 20 secondes, et généralement on choisit un temps de traitement de l'ordre de 25 à 30 secondes. Pour traiter les rouleaux uniformément sur toute leur périphérie, on les fait de préférence osciller ou tourner sur eux-mêmes, suivant leur axe, devant la source de chaleur. Ensuite, on laisse refroidir à l'air libre et on rectifie le rouleau sur l'ensemble de la partie utile si cette opération n'a pas été faite précédemment, ou seulement sur les parties traitées si une première opération a déjà été faite.

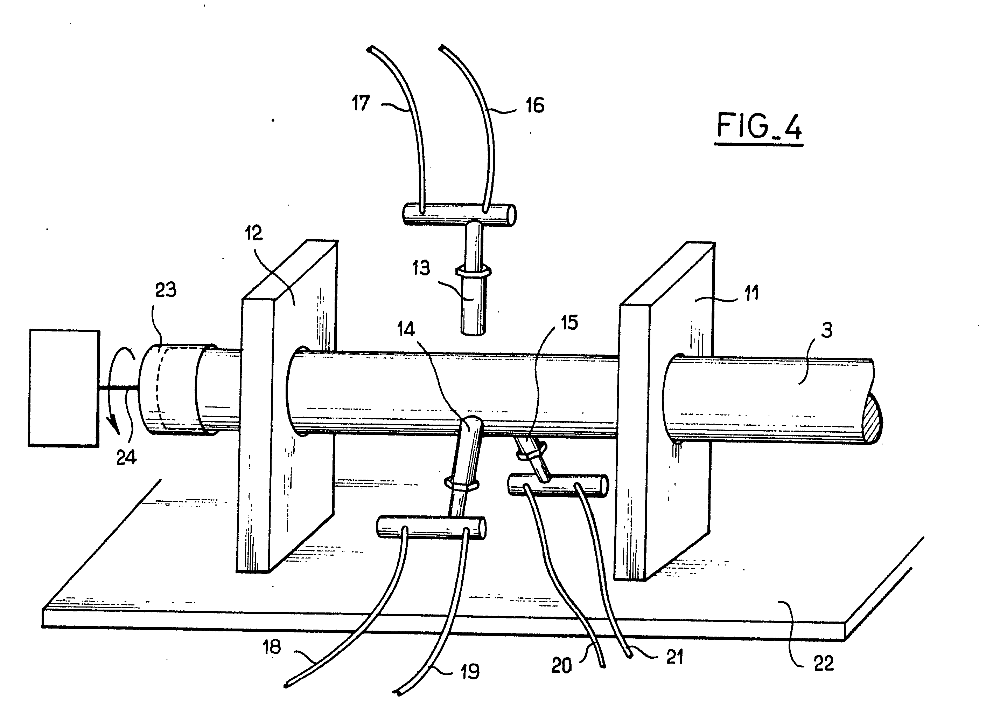

Pour effectuer ce traitement, on peut utiliser le dispositif montré figure 4. Il comprend essentiellement des moyens de maintien du rouleau à traiter, à savoir au moins deux paliers 11 et 12 dont la section est égale à celle des rouleaux à traiter et dont l'espacement mutuel est réglable pour s'adapter à différentes longueurs de rouleaux, et des brûleurs, trois brûleurs 13, 14, 15 sur la figure, alimentés en un gaz capable de fournir une température de l'ordre de 1800°C. Ces trois brûleurs sont dirigés perpendiculairement à l'axe du rouleau 3 à traiter, c'est-à-dire dirigés vers le rouleau 3, disposés en couronne et répartis à 120° à sa périphérie. Le gaz employé peut être un mélange d'oxygène et de «TETRENE», le tétrène étant un mélange gazeux de carbures d'hydrogène à fort pouvoir calorifique, à forte teneur de propanediène et de propyne.

Chaque brûleur 13, 14, 15 possède alors deux alimentations 16 et 17, 18 et 19, 20 et 21, respectivement en oxygène et en tétrène. L'ensemble du dispositif est porté par une table 22. Le dispositif comporte en outre un moyen moteur capable d'entraîner le rouleau 3 en rotation sur lui-même suivant son axe pendant son traitement. Il peut s'agir d'un mandrin 23 qu'on emmanche sur une extrémité du rouleau 3, ledit mandrin 23 étant relié à un arbre moteur 24.

Pour traiter un rouleau 23, on procède de la façon décrite ci-après. On glisse le rouleau 3 à l'intérieur des deux paliers supports 11 et 12 réglés au bon écartement pour maintenir le rouleau et pour dégager les zones à traiter. On emmanche le mandrin 23 sur une des extrémités du rouleau, on entraîne le rouleau en rotation. Une vitesse de rotation de l'ordre de 1 tour par seconde est convenable. On positionne les brûleurs 13, 14 et 15 en regard de la zone à traiter, on les allume pendant un temps qui pour un rouleau ayant environ 70 mm de diamètre, et pour une zone à traiter de l'ordre de 5 cm de largeur est de l'ordre de 25 à 30 secondes. On obtient ainsi seulement un traitement de surface. La surface de la zone traitée prend un aspect vitreux. On laisse ensuite refroidir à l'air libre et on rectifie. Si le rouleau était initialement brut de moulage, on le rectifie sur toute sa longueur; s'il avait déjà été rectifié, on ne rectifie après traitement que la zone traitée.

Si le renforcement de zones autres que celles reposant sur des galets s'avère nécessaire, le traitement par la chaleur, dans ces autres zones est également possible.

**Revendications**

1. Installation de traitement de feuilles de verre notamment four de trempe ou four de réchauffage, dans laquelle les feuilles de verre sont transportées à haute température sur des rouleaux en silice frittée, caractérisée en ce que les rouleaux possèdent au moins dans leurs régions susceptibles d'être usées et portant sur des galets de support, des zones annulaires traitées, plus dures, obtenues par exposition à une haute température supérieure à 1750°C, de préférence de l'ordre de 1800°C jusqu'à obtenir un aspect de surface lisse et vitreux.

2. Installation selon la revendication 1 caractérisée en ce que les zones annulaires ont de 2 à 6 cm de largeur de façon à porter sur des galets ayant environ 1cm de large.

3. Procédé d'obtention de rouleaux identiques à ceux qui équipent l'installation selon les revendications 1 ou 2 dans lequel on forme lesdits rouleaux en silice frittée, caractérisé en ce qu'on expose les zones à traiter des rouleaux à une haute température supérieure à 1750°C de préférence de l'ordre de 1800°C, jusqu'à obtenir un aspect de surface lisse et vitreux des zones traitées.

4. Procédé selon la revendication 3, caractérisé en ce que le temps de traitement est de 25 à 30 secondes.

5. Procédé selon l'une quelconque des revendications 3 ou 4, caractérisé en ce qu'on fait osciller ou tourner sur lui-même autour de son axe, le rouleau à traiter, devant la ou les sources de chaleur produisant la haute température.

6. Procédé selon la revendication 5, caractérisé en ce que la rotation du rouleau sur lui-même se fait à raison d'environ 1 tour par seconde.

7. Procédé selon l'une quelconque des revendications 3 à 6 caractérisé en ce qu'on laisse refroidir à l'air libre les zones traitées à haute température.

8. Procédé selon l'une quelconque des revendications 3 à 7, caractérisé en ce que, après traitement à haute température, on rectifie au moins les portions traitées.

## Claims

1. An installation for treatment of glass sheets, such as a tempering furnace or a reheating furnace, in which the glass sheets are transported at high temperature on rollers of sintered silica, characterised in that the rollers have, at least at their parts subject to wear bearing on support rollers, harder treated annular zones obtained by exposure to a high temperature above 1750°C, preferably of the order of 1800°C to obtain a smooth, vitreous surface appearance.

2. An installation according to claim 1, characterised in that the annular zones are of width from 2 to 6 cm to bear on rollers having a width of about 1 cm.

3. A method of making rollers as used in an installation according to claim 1 or 2, in which said rollers are formed of sintered silica, characterised in that the zones of the rollers to be treated are exposed to a high temperature above 1750°C, preferably of the order of 1800°C to obtain a smooth, vitreous surface appearance of the zones treated.

4. A method according to claim 3, characterised in that the treatment time is from 25 to 30 seconds.

5. A method according to claim 3 or 4, characterised in that the roller to be treated is caused to oscillate or rotate about its axis in front of the source or sources of heat producing the high temperature.

6. A method according to claim 5, characterised in that rotation of the roller is carried out at a rate of about 1 revolution per second.

7. A method according to any one of claims 3 to 6, characterised in that the zones treated at high temperature are allowed to cool in free air.

8. A method according to any one of claims 3 to 7, characterised in that after treatment at high temperature at least the portions treated are rectified.

## Patentansprüche

1. Anlage zur Behandlung von Glasscheiben, insbesondere Vorspann- oder Aufwärmofen, in welcher die Glasscheiben bei hoher Temperatur auf Walzen aus gesintertem Siliziumdioxid transportiert werden, dadurch gekennzeichnet, dass die Walzen mindestens in den Bereichen, in denen sie auf Verschleiss beansprucht werden und an welchen sie sich auf den Stützrollen abstützen, härter behandelte Ringzonen besitzen, die dadurch erhalten sind, dass sie einer hohen Temperatur über 1750°C und zwar vorzugsweise in Höhe von 1800°C ausgesetzt werden, bis ein glattes und glasartiges Oberflächenaussehen erzielt wird.

2. Anlage nach Anspruch 1, dadurch gekennzeichnet, dass die Ringzonen eine Breite von 2 bis 6 cm für das Laufen auf Stützrollen mit einer Breite von etwa 1 cm besitzen.

3. Verfahren zur Herstellung von Walzen gemäss der Anlage nach Anspruch 1 oder 2, bei welchem die Walzen aus gesintertem Siliziumdioxid gebildet werden, dadurch gekennzeichnet, dass die zu behandelnden Zonen der Walzen einer hohen Temperatur über 1750°C und zwar vorzugsweise in Höhe von 1800°C ausgesetzt werden, bis ein glattes und glasartiges Oberflächenaussehen der behandelten Zonen erzielt wird.

4. Verfahren nach Anspruch 3, dadurch gekennzeichnet, dass die Behandlungsdauer 25 bis 30 Sekunden beträgt.

5. Verfahren nach einem der Ansprüche 3 oder 4, dadurch gekennzeichnet, dass man die zu behandelnde Walze vor der oder die Wärmequelle(n) zur Erzeugung der hohen Temperatur um ihre eigene Achse oszilliert oder dreht.

6. Verfahren nach Anspruch 5, dadurch gekennzeichnet, dass die Drehung der Walze um sich selbst mit etwa 1 U/s durchgeführt wird.

7. Verfahren nach einem der Ansprüche 3 bis 6, dadurch gekennzeichnet, dass man die bei hoher Temperatur behandelten Zonen im Freien abkühlen lässt.

8. Verfahren nach einem der Ansprüche 3 bis 7, dadurch gekennzeichnet, dass nach Behandlung mit hoher Temperatur mindestens die behandelten Abschnitte gerichtet werden.

FIG_1

4

6

1

2

3

7

5

8

5

1

FIG_2

2

3

5

FIG_3

4

6

3

7

8

5

5

FIG_4